# EUROPÄISCHE PATENTSCHRIFT

(11) **EP 2 018 780 B1**
(45) Veröffentlichungstag und Bekanntmachung des Hinweises auf die Patenterteilung: **03.10.2012**
(21) Anmeldenummer: 07728981.7
(22) Anmeldetag: 10.05.2007
(51) Int. Cl.: H04W 16/12

(54) **MOBILFUNKNETZ MIT INVERSER FREQUENZÜBERLAGERUNG**
MOBILE RADIO NETWORK WITH INVERSE FREQUENCY HETERODYNING
RÉSEAU DE RADIOTÉLÉPHONIE MOBILE AVEC SUPERPOSITION INVERSÉE DE FRÉQUENCES

(30) Priorität: 18.05.2006 DE 102006023641
(43) Veröffentlichungstag der Anmeldung: 28.01.2009
(73) Patentinhaber: Vodafone Holding GmbH, 40213 Düsseldorf (DE)
(72) Erfinder: HABENDORF, Rene, 01277 Dresden (DE); ZIMMERMANN, Ernesto, 01307 Dresden (DE)
(74) Vertreter: Weisse, Renate
(86) Internationale Anmeldenummer: PCT/EP2007/054529
(87) Internationale Veröffentlichungsnummer: WO 2007/134978

(56) Entgegenhaltungen:
- WO-A-96/13952
- ZHANG X ET AL: "A CHANNEL SHARING SCHEME FOR CELLULAR MOBILE COMMUNICATIONS" WIRELESS PERSONAL COMMUNICATIONS, SPRINGER, DORDRECHT, NL, Bd. 9, Nr. 2, Februar 1999 (1999-02), Seiten 149-162, XP000800963 ISSN: 0929-6212
- WOO T-K ET AL: "SPACE PARTITIONING HYBRID CHANNEL ASSIGNMENT SCHEME FOR CELLULAR NETWORKS" WIRELESS PERSONAL COMMUNICATIONS, SPRINGER, DORDRECHT, NL, Bd. 18, Nr. 1, Juli 2001 (2001-07), Seiten 79-92, XP001099998 ISSN: 0929-6212
- RANTA P A ET AL: "Chapter 3: Radio Aspects: Interference suppression by joint demodulation of cochannel signals" GSM: EVOLUTION TOWARDS 3RD GENERATION SYSTEMS, KLUWER, DORDRECHT, NL, 1999, Seiten 1-31, XP002331762

## Beschreibung

### Technisches Gebiet

Die Erfindung betrifft ein Mobilfunknetz, insbesondere nach dem GSM- und/oder UMTS-Standard, zur Kommunikation von Mobilfunkendgeräten, enthaltend wenigstens zwei Basisstationen mit Antennen zum Senden und/oder Empfangen, wobei der Abdeckungsbereich einer Basisstation eine Funkzelle bildet, welche in einen Nahbereich und einen Fernbereich unterteilt ist, in welchen innerhalb einer Funkzelle jeweils unterschiedliche Übertragungsressourcen für den Funkverkehr vorgesehen sind. Ferner betrifft die Erfindung ein Verfahren zur Zuordnung von Übertragungsressourcen in einem Mobilfunknetz, insbesondere nach dem GSM- und/oder UMTS-Standard, für Mobilfunkendgeräte zur Kommunikation im Nah-/Fernbereich, mit folgenden Verfahrensschritten:
a) Bilden von wenigstens zwei Funkzellen, welche sich jeweils aus dem Abdeckungsbereich einer Basisstation mit Antennen zum Senden und/oder Empfangen ergeben,
b) Unterteilen der Funkzellen in einen Nah- und einen Fernbereich,
c) Jeweils Zuordnen unterschiedlicher Übertragungsressourcen für den Nah - und den Fernbereich einer Funkzelle.

### Stand der Technik

Ein Mobilfunknetz besteht in der Regel aus Basisstationen, die in einer annähernd hexagonalen Struktur angeordnet sind. Die hexagonale Struktur ergibt sich aus Funkzellen. Die räumliche Ausdehnung jeweils einer Funkzelle wird durch den Abdeckungsbereich der Basisstationen gebildet, mit der ein Mobilfunkendgerät Kontakt aufnimmt. Jede Basisstation versorgt dazu mit drei zueinander horizontal um 120° gedrehten Antennen drei Funkzellen. Jede der drei Antennen einer Basisstation strahlt somit eine etwa 120° breite "Sendekeule" aus. Diese Anordnung der Funkzellen eines Mobilfunksystems wird als "Kleeblattmodel" bezeichnet. Für die drahtlose Datenübertragung stehen einem Netzbetreiber eines Mobilfunknetzes verschiedene Ressourcen, wie z.B. Frequenzbänder, zur Verfügung, die in verschiedene physikalische Übertragungskanäle unterteilt sind. In zwei angrenzenden Funkzellen eines Mobilfunknetzes werden dabei den Mobilfunkendgeräten unterschiedliche Übertragungsressourcen, z.B. Frequenzbänder, zugeordnet. Die Übertragungsressourcen werden daher so eingestellt, dass es in Grenzbereichen zu keinen Überlappungen kommt.

Die Übertragungskanäle werden wiederum durch Frequenzschlitze innerhalb eines Frequenzbandes, Zeitschlitze innerhalb eines Übertragungsrahmens, Codes bei UMTS, unterteilt, um gleichzeitig möglichst viele Verbindungen unterstützen zu können. Beispielsweise wird in einem GSM-Mobilfunksystem (= **G**lobal **S**ystem for **M**obile communication) ein physikalischer Kanal durch einen Frequenzschlitz und einen Zeitschlitz innerhalb eines Übertragungsrahmens von acht aufeinander folgenden Zeitschlitzen gebildet.

Ein Netzbetreiber muss seine Übertragungsressourcen möglichst oft innerhalb seines Netzes wieder verwenden. Im Allgemeinen wird dies dadurch gelöst, dass die Gesamtmenge der Übertragungsressourcen in orthogonale Untergruppen aufgeteilt wird, die dann jeweils den Funkzellen zugeordnet werden. Dazu ist eine sorgfältige Ressourcenplanung erforderlich. Für die Kommunikation in jeder Funkzelle werden nur Ressourcen aus der dieser Funkzelle zugeordneten Untergruppe verwendet. Dadurch wird der Abstand zwischen Funkzellen, die die gleichen Ressourcen verwenden und deren sich gegenseitig störende Mobilfunksignale, beispielsweise durch Interferenz, beeinflussen, erhöht. Ein Maß für die Beeinflussung einer Übertragung durch Interferenz ist das Verhältnis aus Nutzsignalleistung und Störleistung, kurz SIR (= Signal to Interference Ratio). Erst ab einem bestimmten SIR-Wert kann eine akzeptable Kommunikation stattfinden. Diese Schwelle hängt vom zusätzlichen thermischen Rauschen in den Bauelementen und den Anforderungen der jeweiligen Applikation, also von einem Qualitätsparameter QoS (= Quality of Service), ab.

Ein weiteres wichtiges Maß bei der Ressourcenplanung, wie z.B. bei der Frequenzplanung, ist der Wiederholfaktor, auch "reuse factor" genannt. Der Wiederholfaktor der jeweiligen Ressource beschreibt beispielsweise den Frequenzwiederholfaktor, d.h. die Anzahl der orthogonalen Untergruppen. Ein Wiederholfaktor von eins entspricht dem Fall, dass jede Funkzelle die gleichen Ressourcen nutzt, da es dort nur eine Gruppe gibt. Ein hoher Wiederholfaktor reduziert zwar die Störleistung im Mobilfunknetz erheblich, beschränkt aber auch die spektrale Effizienz des Netzes, da in jeder Funkzelle nur ein kleiner Teil der gesamten Ressourcen des Netzbetreibers verwendet wird.

Sehr häufig werden bei Mobilfunknetzen die Wiederholfaktoren "3" und "7" verwendet. Um den für einen bestimmten Service benötigten SIR-Wert im gesamten Zellbereich zu erzielen, wird das System für den schlechtesten Fall basierend entworfen. Somit bestimmen die Randgebiete einer Funkzelle, in denen die größten Interferenzen durch in der Nähe sendende Nutzer in benachbarten Funkzellen auftreten, den zu verwendenden Wiederholfaktor der zu planenden Ressource. Dadurch entstehen Bereiche eines unnötig hohen SIR-Wertes im zentralen Bereich um die Basisstation, wodurch die spektrale Effizienz des Mobilfunksystems reduziert wird.

Um eine möglichst homogene räumliche Verteilung des SIR in einer Funkzelle zu erreichen, werden in der Literatur unter dem Stichwort "Overlay Concept" Systeme mit überlagerter Ressourcenplanung beschrieben. So kann z. B. die Ressource mit einem niedrigen Wiederholfaktor im inneren Bereich der Funkzelle und einem hohen Wiederholfaktor an den Außenbereichen vergeben werden. Der Nachteil dieses Ansatzes liegt darin, dass eine weitere Reduzierung der Störleistung durch Interferenz unterdrückende Verfahren nicht möglich ist, da durch die Ressourcenplanung keine starken und somit detektierbaren Störer auftreten.

*Eine Veröffentlichung von* Zhang und Zhuang im "Wireless Personal Communication 9, 149-163*" beschreibt ein Schema zur gemeinsamen Benutzung von Funkkanälen im Mobilfunknetz. Das sogenannte NCCS (Neighbor Cell Channel Sharing) basiert auf eine Teilung der Funkzellen in eine innere und eine äußere Region, wobei die Funkkanäle ebenfalls in zwei Gruppen geteilt sind: einen Grundkanal, der ausschließlich in der Funkzelle sowohl in der inneren als auch in der äußeren Region benutzt wird und einen geteilten Kanal, der zum Einen von der inneren Region der Funkzelle und zum Anderen von den sechs Nachbarfunkzellen verwendet wird. Somit ergibt sich für jede Funkzelle ein Pool von Funkkanälen, die von der jeweiligen Funkzelle und den Nachbarfunkzellen gemeinsam benutzt werden und so zu einer besseren Auslastung des Mobilfunknetzes führen. Eine weitere Reduzierung der Störleistung durch Interferenz unterdrückende Verfahren ist hier nicht möglich, da durch die Ressourcenplanung keine starken und somit detektierbaren Störer auftreten.*

### Offenbarung der Erfindung

Aufgabe der Erfindung ist es, Nachteile des Standes der Technik zu beseitigen und insbesondere die Effizienz eines Mobilfunknetzes zu steigern und dessen Kapazität zu erhöhen.

Erfindungsgemäß wird die Aufgabe dadurch gelöst, dass bei einem Mobilfunknetz, insbesondere nach dem GSM- und/oder UMTS-Standard, zur Kommunikation von Mobilfunkendgeräten der eingangs genannten Art, die Übertragungsressourcen des Fernbereichs zweier benachbarter Funkzellen jeweils übereinstimmend vorgesehen sind.

Weiterhin wird die Aufgabe durch ein Verfahren zur Zuordnung von Übertragungsressourcen in einem Mobilfunknetz der eingangs genannten Art gelöst, bei dem
d) im Fernbereich zweier benachbarter Funkzellen jeweils übereinstimmende Übertragungsressourcen den Mobilfunkendgeräten zur Kommunikation zugeordnet werden.

Entgegen dem Stand der Technik versucht das vorgeschlagene Mobilfunknetz bzw. Verfahren nicht grundsätzlich, die Störleistung, welche durch Interferenz aus benachbarten Funkzellen verursacht wird, zu minimieren. Vielmehr werden bewusst wenige starke Störer zugelassen. Das Mobilfunkendgerät eines Nutzers muss sich auf solche bekannten Störgrößen einstellen und ggf. eliminieren. Auf diese Weise können Nutzer benachbarter Funkzellen die gleiche Übertragungsressource, wie beispielsweise Frequenzschlitz, Zeitschlitz oder Mehrnutzercode, verwenden.

Dies kann durch Verwendung eines niedrigen Ressourcenwiederholfaktors am Zellrand, also an der Grenze zwischen benachbarten Funkzellen, erzielt werden, da hierdurch die Wahrscheinlichkeit eines Nutzers mit der selben Übertragungsressource in einer benachbarten Funkzelle, also in unmittelbarer Nähe des betrachteten Nutzers, erhöht wird. Diese wenigen leistungsstarken Störer können unter Verwendung von Interferenz unterdrückenden Signalverarbeitungsverfahren aus dem Signal des Nutzers entfernt und somit eine Übertragung ermöglicht werden. Durch den niedrigen Wiederholfaktor wird die spektrale Effizienz des Mobilfunksystems erhöht.

In Zellgebieten, in denen das Auftreten weniger starker und signifikanter Störer unwahrscheinlich ist, etwa in der Mitte einer Funkzelle, wo keine unmittelbare Angrenzung einer benachbarten Funkzelle erfolgt, ist die Verwendung von Interferenz unterdrückenden Verfahren durch die schlechte Detektierbarkeit der schwachen Störer wenig sinnvoll. Hier erfolgt eine Reduzierung der Interferenz durch die Verwendung eines hohen Wiederholfaktors.

Dadurch ergibt sich eine inverse Überlagerung. Beim Stand der Technik erfolgt eine übereinstimmende Zuordnung der Übertragungsressourcen nur im Nahbereich, jedoch nicht am Zellrand, dem Fernbereich. Im Gegensatz dazu liegt bei vorliegender Erfindung eine inverse Zuordnung vor. Übereinstimmende Übertragungsressourcen werden im Fernbereich vorgenommen und unterschiedliche Übertragungsressourcen im Nahbereich, also umgekehrt zum Stand der Technik.

Als vorteilhafte Ausgestaltung des erfindungsgemäßen Mobilfunknetzes erweist sich, wenn die Mobilfunkendgeräte jeweils Filtermittel zum Entfernen von Störsignalen mit höherer, gleicher oder geringfügig unterschreitender Intensität als das Nutzsignal aufweisen. Eine geringfügig unterschreitende Intensität entspricht in einer bevorzugten Ausführungsform der Erfindung einem Abstand von 10 dB zwischen Störsignal und Nutzsignal. In einer alternativen Ausführungsform kann der Abstand auch 3 dB oder 6 dB betragen. Durch diese Maßnahme wird erreicht, dass die Störsignale, welche insbesondere durch Interferenz von benachbarten Funkzellen verursacht werden, direkt im Mobilfunkendgerät eines Nutzers aus dem Nutzsignal herausgefiltert bzw. nach erfolgter Detektion subtrahiert werden. Gegenstand der Erfindung ist daher auch ein Mobilfunkendgerät mit Filtermitteln, welche zum Entfernen von Störsignalen in einem solchen Mobilfunknetz vorgesehen sind.

Weitere Vorteile ergeben sich aus dem Gegenstand der Unteransprüche sowie den Zeichnungen mit den dazugehörigen Beschreibungen.

### Kurze Beschreibung der Zeichnung

- Fig. 1: zeigt in einer schematischen, Prinzipskizze eines Ausführungsbeispiels eines Mobilfunknetzes mit einem Wiederholfaktor (Reuse) "3" bei dem die Verwendung eines bestimmten Frequenzbereichs aller drei Funkzellen erfolgt.
- Fig. 2: zeigt in einer schematischen Prinzipskizze eines Ausführungsbeispiels eines Mobilfunknetzes mit einem Wiederholfaktor (Reuse) "7" bei dem die Verwendung eines bestimmten Frequenzbereichs aller "7" Funkzellen erfolgt.
- Fig. 3: zeigt ein Ausführungsbeispiels eines Mobilfunknetzes mit "Sendekeulen" mit dem Wiederholfaktor "1" in der Zellmitte und dem Wiederholfaktor "3" am Zellrand.
- Fig. 4: zeigt ein Ausführungsbeispiels eines Mobilfunknetzes als "Sendekeulen" mit dem Wiederholfaktor "3" in der Zellmitte und dem Wiederholfaktor "1" am Zellrand.
- Fig. 5: zeigt ein Ausführungsbeispiel eines Mobilfunknetzes mit Mobilfunkendgeräten zur Unterdrückung von Störsignalen.

### Bevorzugtes Ausführungsbeispiel

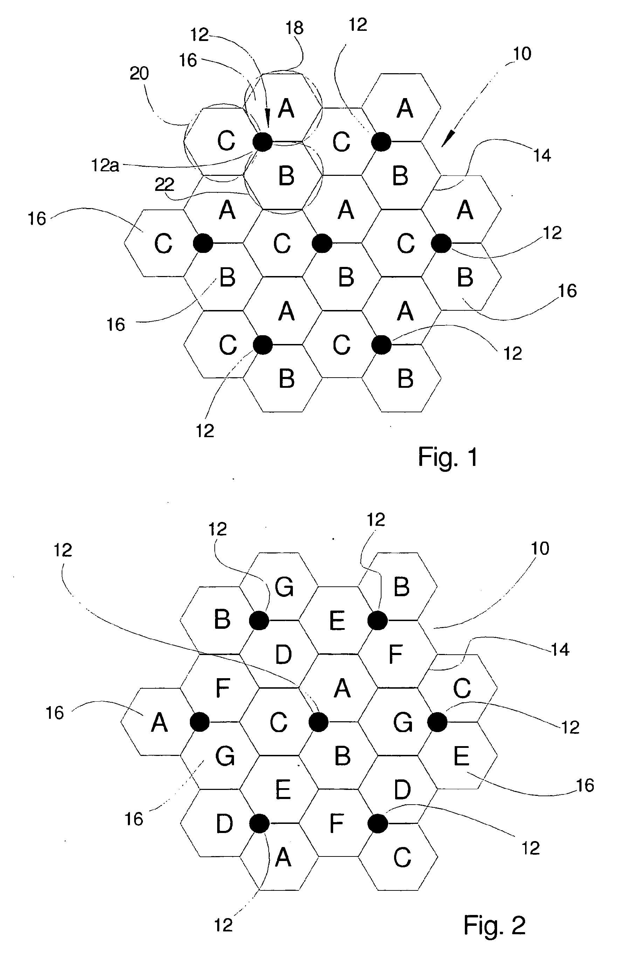

In Fig. 1 ist in einer schematischen Prinzipskizze ein Mobilfunknetz 10 dargestellt. Das Mobilfunknetz 10 besteht in der Regel aus Basisstationen 12, die in einer annähernd hexagonalen Struktur 14 angeordnet sind. Die hexagonale Struktur 14 ergibt sich aus Funkzellen 16. Die Basisstationen 12 sind als schwarze Punkte dargestellt. Jede Basisstation 12 versorgt mit drei zueinander horizontal um 120° gedrehten Antennen drei der Funkzellen 16. Jede der drei Antennen einer Basisstation 12 strahlt somit eine etwa 120° breite Sendekeule 18, 20, 22 aus, die beispielhaft an einer Basisstation 12a dargestellt ist. Diese Anordnung der Funkzellen 16 eines Mobilfunknetzes 10 wird als "Kleeblattmodel" bezeichnet und dient in dieser Beschreibung lediglich zur Illustration. Das beschriebene Verfahren kann auf jedes zellulare Mobilfunknetz 10 angewendet werden. Als zwischen den Zellen aufzuteilende Übertragungsressource werden hier beispielhaft Frequenzbänder verwendet.

Jede der Sendekeulen 18, 20, 22 einer jeden Basisstation 12 strahlt in einem anderen Frequenzband. Die verschiedenen Frequenzbänder werden jeweils mit A, B, C bezeichnet. Ein wichtiges Maß bei der Frequenzplanung ist der Wiederholfaktor (Reuse) der jeweiligen Ressource, der die Anzahl von orthogonalen Untergruppen beschreibt. Ein Wiederholfaktor von "1" entspricht dem Fall, dass jede Funkzelle 16 das gleiche Frequenzband A nutzt, da es nur eine Gruppe gibt. Ein hoher Wiederholfaktor reduziert zwar die Störleistung in dem Mobilfunknetz 10, beschränkt aber auch die spektrale Effizienz des Mobilfunknetzes 10, da in jeder Funkzelle 16 nur ein kleiner Teil der gesamten Ressourcen verwendet wird. Fig. 1 zeigt ein Mobilfunknetz 10 mit einem Wiederholfaktor "3".

Fig. 2 zeigt ein entsprechendes Mobilfunknetz 10 jedoch mit einem Wiederholfaktor "7". Die Frequenzbänder werden hier mit A, B, C, D, E, F und G bezeichnet.

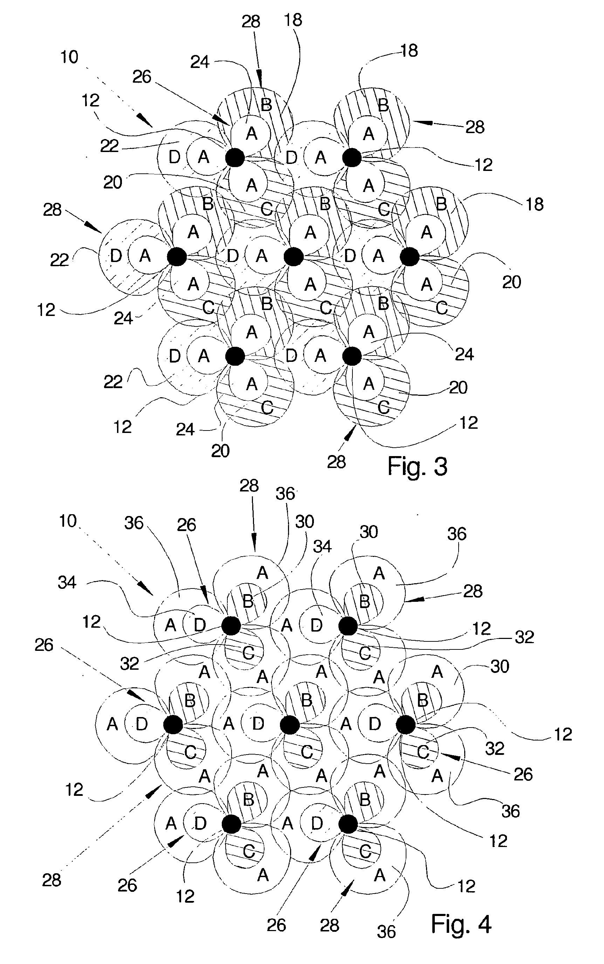

Fig. 3 zeigt ein Mobilfunknetz 10, wie es derzeit Stand der Technik ist. Anstelle der zuvor gezeigten hexagonalen Struktur 14 sind nun lediglich Sendekeulen 18, 20, 22, 24 dargestellt. Jeder Basisstation 12 wird ein Nahbereich 26 und einen Fernbereich 28 zugeordnet. Der Nahbereich 26 befindet sich im unmittelbaren Bereich einer jeden Basisstation 12. Der Fernbereich 28 erstreckt sich darüber hinaus zum Rand der Funkzellen 16. Im Nahbereich 26 ist ein Wiederholfaktor "1" vorgesehen. Alle Sendekeulen 24 im Nahbereich 26 verfügen über das gleiche Frequenzband A. Im Fernbereich 28 einer jeden Basisstation 12 ist der Wiederholfaktor "drei" vorgesehen. Alle Sendekeulen 18, 20, 22 verfügen über verschiedene Frequenzbänder B, C, D.

Fig. 4 zeigt ein erfindungsgemäßes Mobilfunknetz 10 mit inverser Frequenzbandüberlagerung. Jeder Basisstation 12 wird entsprechend zu Fig. 3 ein Nahbereich 26 und einen Fernbereich 28 zugeordnet. Der Nahbereich 26 befindet sich im unmittelbaren Bereich einer jeden Basisstation 12. Der Fernbereich 28 erstreckt sich darüber hinaus zum Rand der Funkzellen 16. Der Nahbereich 26 wird mit Sendekeulen 30, 32, 34 versorgt. Der Fernbereich 28 wird jeweils mit Sendekeulen 36 abgedeckt. Dabei haben die Sendekeulen 30, 32, 34 jeweils unterschiedliche Frequenzbänder B, C, D. Die Sendekeulen 36 des Fernbereichs verwenden alle ein übereinstimmendes Frequenzband A. Das vorliegende Mobilfunknetz 10 verfügt somit in dem Nahbereich 26 über einen Wiederholfaktor "3" und in dem Fernbereich 28 über einen Wiederholfaktor "1" bzgl. der Frequenzbänder A, B, C, D. Dadurch werden in den Fernbereichen 28 zweier benachbarter Funkzellen immer übereinstimmende Frequenzbänder A verwendet.

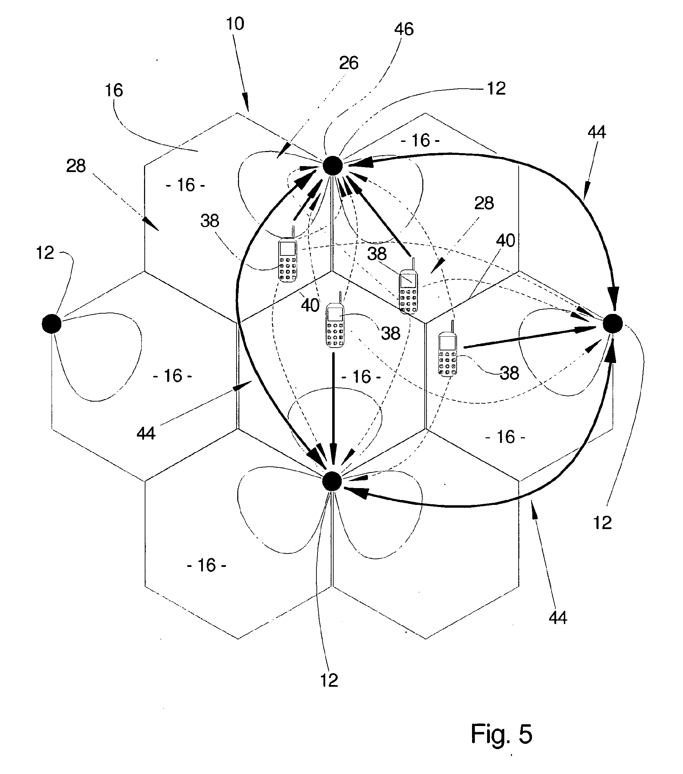

Im Folgenden wird ein Ausführungsbeispiel für Interferenz unterdrückende Verfahren erläutert. In Fig. 5 sind vier Mobilfunkendgeräte 38 dargestellt, die vom Zellrand 40 aus mit der Basisstation 12 der jeweiligen Funkzelle 16 kommunizieren. Diese Verbindungen sind durch Pfeile 42 gekennzeichnet. In dem Mobilfunknetz 10 mit inverser Frequenzbandüberlagerung verwenden die Mobilfunkendgeräte 38 einen geringen Frequenzbandwiederholfaktor. Bei dem im Beispiel verwendeten Wiederholfaktor von "1" verwenden alle Mobilfunkendgeräte 38 im Fernbereich 28 der Funkzellen 16 das gleiche Frequenzband A und generieren somit gegenseitig durch Interferenz eine Störleistung.

In der Aufwärtstrecke von den Mobilfunkendgeräten 38 zu den Basisstationen 12, als "Uplink" bezeichnet, empfängt somit jede Basisstation 12 die Überlagerung des Signals eines ihr zugeordneten Teilnehmers mit den Signalen der Teilnehmer aus benachbarten Funkzellen 16. Benachbarte Basisstationen 12 können sich nun zu einer aktiven Gruppe 44 derart verbinden, dass sie ihre empfangenen Signale z.B. über das Festnetz oder Richtfunkverbindungen an einen zentralen Knoten, welcher z.B. durch eine Basisstationen 46 der aktiven Gruppe 44 gebildet werden kann, übermitteln, und so ein virtuelles Mehrpunkt zu Punkt MIMO System bilden. Der Begriff MIMO (= Multiple Input Multiple Output) bezeichnet im Allgemeinen Systeme mit mehreren Sende- und Empfangsantennen zur Steigerung der Datenrate bzw. zur Verbesserung der Übertragungsqualität.

Bei Mehrpunkt zu Punkt MIMO Systemen kann eine gemeinsame Signalverarbeitung nur am Empfänger erfolgen, da die Sender nicht miteinander kooperieren, was im Uplink eines Mobilfunksystems der Fall ist. In diesem zentralen Knoten können nun bekannte MIMO-Detektionsverfahren, wie beispielsweise "VBLAST"-Empfänger, Entscheidungsrückgekoppelte Entzerrung, Sukzessive bzw. parallele Interferenzunterdrückung oder Lineare Entzerrung eingesetzt werden, um die einzelnen Uplink-Datenströme der aktiven Gruppe 44 zu trennen und an das Mobilfunknetz 10 zur weiteren Übermittlung bzw. Verarbeitung zu übergeben. Eine derartige gemeinsame Verarbeitung des Empfangssignals ist auch in der Literatur unter dem Begriff "Joint Detection" zusammengefasst. Durch die MIMO-Detektion wird die starke Interferenz, die eine erfolgreiche Detektion an einer einzelnen Basisstationen 12 ausgeschlossen hätte, inherent entfernt.

Die Bildung der aktiven Gruppe 44 und die Zuordnung eines zentralen Knotens kann im laufenden Netzbetrieb dynamisch durch Messung der Interferenzsituation erfolgen. Hierfür kann die Messung der Stärke des Übertragungskanals zwischen einem Mobilfunkendgerät 38 und den benachbarten Basisstation 12 anhand von Pilotsequenzen verwendet werden, die im Rahmen von Handover-Prozeduren vorliegt.

Weiterhin ist für eine erfolgreiche MIMO-Detektion die Kenntnis der Übertragungskanäle mit signifikantem Leistungsanteil zwischen den Mobilfunkendgerät 38 und den Basisstation 12 der aktiven Gruppe 44 notwendig. Hierfür muss eine Möglichkeit der ungestörten Kanalmessung vorgesehen werden, was durch orthogonale Pilotsequenzen oder das Absenden von Pilotsequenzen in einem Zeitmultiplexverfahren realisiert werden kann.

In der Abwärtstrecke von den Basisstationen 12 zu den Mobilfunkendgeräten 38, als "Downlink" bezeichnet, kann durch die beschriebene Kooperation zwischen den Basisstationen 12 ein Punkt zu Mehrpunkt MIMO System gebildet werden, wo in einem zentralen Knoten eine Vorverarbeitung der Sendesignale jeder Basisstation 12 derart erfolgt, dass das von den Mobilfunkendgeräten 12 empfangene überlagerte Signal einen hohen "SIR"- Wert aufweist. Als Vorverzerrungsverfahren können z. B. lineare Vorverzerrung oder "Tomlinson-Harashima Precoding" (THP) eingesetzt werden. Die für diese Verfahren notwendige senderseitige Kenntnis des Übertragungskanals kann in TDD (= Time Division Duplex) Systemen durch Messung des Übertragungskanals im Uplink erhalten werden, da der Übertragungskanal reziprok bzgl. Uplink und Downlink ist. Ist diese Kanalreziprozität nicht vorhanden, wie z. B. in FDD (= Frequency Division Duplex) Systemen, können im Uplink ermittelte Kanalschätzwerte über einen Rückkanal an den Sender übertragen werden.

## Patentansprüche

1. Mobilfunknetz (10), insbesondere nach dem GSM- und/oder UMTS-Standard, zur Kommunikation von Mobilfunkendgeräten (38), enthaltend wenigstens zwei Basisstationen (12) mit Antennen zum Senden und/oder Empfangen, wobei der Abdeckungsbereich einer Basisstation (12) eine Funkzelle (16) bildet, welche in einen Nahbereich (26) und einen Fernbereich (28) unterteilt ist, in welchen innerhalb einer Funkzelle (16) jeweils unterschiedliche Übertragungsressourcen für den Funkverkehr vorgesehen sind, **dadurch gekennzeichnet, dass** die Frequenzbänder (A) des Fernbereichs (28) zweier benachbarter Funkzellen (16) jeweils übereinstimmend vorgesehen sind.

2. Mobilfunknetz (10), insbesondere nach dem GSM-Standard, zur Kommunikation von Mobilfunkendgeräten (38) nach Anspruch 1, **dadurch gekennzeichnet, dass** die Übertragungsressourcen als Frequenzen vorgesehen sind.

3. Mobilfunknetz (10), insbesondere nach dem GSM-Standard, zur Kommunikation von Mobilfunkendgeräten (38) nach einem der Ansprüche 1 oder 2, **dadurch gekennzeichnet, dass** die Übertragungsressourcen als Zeitschlitze vorgesehen sind.

4. Mobilfunknetz (10), insbesondere nach dem GSM-Standard, zur Kommunikation von Mobilfunkendgeräten (38) nach einem der Ansprüche 1 bis 3, **gekennzeichnet durch** Filtermittel zum Entfernen von Störsignalen, insbesondere solche die der Intensität eines Nutzsignals entsprechen.

5. Mobilfunkendgerät (38) für ein Mobilfunknetz (10), wie es in den Ansprüchen 1 bis 4 beansprucht wird, **gekennzeichnet durch** Filtermittel zum Entfernen von Störsignalen, insbesondere solche die der Intensität eines Nutzsignals entsprechen.

6. Verfahren zur Zuordnung von Übertragungsressourcen in einem Mobilfunknetz (10), insbesondere nach dem GSM- und/oder UMTS-Standard, für Mobilfunkendgeräte (38) zur Kommunikation, mit folgenden Verfahrensschritten:
a) Bilden von wenigstens zwei Funkzellen (16), welche sich jeweils aus dem Abdeckungsbereich einer Basisstation (12) mit Antennen zum Senden und/oder Empfangen ergeben,
b) Unterteilen der Funkzellen (16) in einen Nah- (26) und einen Fernbereich (28),
c) Jeweils Zuordnen unterschiedlicher Übertragungsressourcen für den Nah- (26) und den Fernbereich (28) einer Funkzelle (16),
**dadurch gekennzeichnet, dass**
d) im Fernbereich (28) zweier benachbarter Funkzellen (16) jeweils übereinstimmende Übertragungsressourcen (A) den Mobilfunkendgeräten (38) zur Kommunikation zugeordnet werden.

7. Verfahren zur Zuordnung von Übertragungsressourcen in einem Mobilfunknetz (10) nach Anspruch 6, **dadurch gekennzeichnet, dass** Frequenzen als Übertragungsressourcen zugeordnet werden.

8. Verfahren zur Zuordnung von Übertragungsressourcen in einem Mobilfunknetz (10) nach einem der Ansprüche 6 oder 7, **dadurch gekennzeichnet, dass** Zeitschlitze als Übertragungsressourcen zugeordnet werden.

## Claims

1. A mobile radio network (10), especially according to GSM and/or UMTS standard, for communication of mobile stations (38) comprising at least two base stations (12) having antennas for transmission and/or reception, wherein the covered area of a base station (12) forms a radio cell (16) which is divided into a close-up range (26) and a far range (28) in which different transmission resources are respectively provided within a radio cell (16) for radio traffic, **characterized in that** the frequency bands (A) of the far range (28) of two adjacent radio cells (16) are respectively coincident.

2. A mobile radio network (10), especially according to GSM standard, for communication of mobile stations (38) according to claim 1, **characterized in that** the transmission resources are provided as frequencies.

3. A mobile radio network (10), especially according to GSM standard, for communication of mobile stations (38) according to any one of claims 1 or 2, **characterized in that** the transmission resources are provided as time slots.

4. A mobile radio network (10), especially according to GSM standard, for communication of mobile stations (38) according to any one of claims 1 to 3, **characterized by** filter means for removing interfering signals, especially such which correspond to the intensity of the wanted signal.

5. A mobile station (38) for a mobile radio network (10) as claimed in any one of claims 1 to 4, **characterized by** filter means for removing interfering signals, especially such which correspond to the intensity of the wanted signal.

6. A method for allocating transmission sources in a mobile radio network (10), especially according to GSM and/or UMTS standard, for mobile stations (38) for communication, comprising the steps of:
a) forming of at least two radio cells (16), each resulting from the covered area of a base station (12) having antennas for transmission and/or reception,
b) dividing the radio cells (16) into a close-up range (26) and a far range (28),
c) allocating different transmission resources to the close-up range (26) and the far range (28) of a radio cell (16) respectively,
**characterized in that**
d) coincident transmission resources (A) are allocated to the mobile stations (38) for communication in the far range (28) of two adjacent radio cells (16) respectively.

7. A method for allocating transmission resources in a mobile radio network (10) according to claim 6, **characterized in that** frequencies are allocated as transmission resources.

8. A method for allocating transmission resources in a mobile radio network (10) according to any one of claims 6 or 7, **characterized in that** time slots are allocated as transmission resources.

## Revendications

1. Réseau de radiotéléphonie mobile (10), notamment d'après le standard GSM et/ou UMTS, pour la communication de terminaux de radiotéléphonie mobile (38), comprenant au moins deux stations de base (12) munies d'antennes d'émission et/ou de réception, la zone de couverture d'une station de base (12) formant une cellule radio (16) divisée en une zone locale (26) et une zone éloignée (28) dans lesquelles sont prévues à chaque fois à l'intérieur de la cellule (16) des ressources de transmission différentes pour la radiocommunication, **caractérisé en ce que** les bandes de fréquence (A) de la zone éloignée (28) de deux cellules radio adjacentes (16) sont prévues de sorte à être chacune concordantes.

2. Réseau de radiotéléphonie mobile (10), notamment d'après le standard GSM, pour la communication de terminaux de radiotéléphonie mobile (38), selon la revendication 1, **caractérisé en ce que** les ressources de transmission sont prévues sous forme de fréquences.

3. Réseau de radiotéléphonie mobile (10), notamment d'après le standard GSM, pour la communication de terminaux de radiotéléphonie mobile (38), selon l'une quelconque des revendications 1 ou 2, **caractérisé en ce que** les ressources de transmission sont prévues sous forme d'intervalles de temps.

4. Réseau de radiotéléphonie mobile (10), notamment d'après le standard GSM, pour la communication de terminaux de radiotéléphonie mobile (38), selon l'une quelconque des revendications 1 à 3, **caractérisé par** des moyens de filtre destinés à éliminer les signaux parasites, notamment ceux correspondant à l'intensité d'un signal utile.

5. Terminal de radiotéléphonie mobile (38) pour un réseau de radiotéléphonie mobile (10), tel que revendiqué dans les revendications 1 à 4, **caractérisé par** des moyens de filtre destinés à éliminer les signaux parasites, notamment ceux correspondant à l'intensité d'un signal utile.

6. Procédé pour l'affectation de ressources de transmission dans un réseau de radiotéléphonie mobile (10), notamment d'après le standard GSM et/ou UMTS, pour la communication de terminaux de radiotéléphonie mobile (38), comprenant les étapes de procédé suivantes :
(a) création d'au moins deux cellules radio (16) résultant chacune de la zone de couverture d'une station de base (12) munie d'antenne d'émission et/ou de réception,
(b) division des cellules radio (16) en zone locale (26) et en zone éloignée (28),
(c) affectation de chacune des différentes ressources de transmission pour la zone locale (26) et la zone éloignée (28) d'une cellule radio (16),
**caractérisé en ce que**
(d) dans la zone éloignée (28) de deux cellules radio adjacentes (16), les ressources de transmission concordantes sont affectées chacune aux terminaux de radiotéléphonie mobile (38) en vue de la communication.

7. Procédé pour l'affectation de ressources de transmission dans un réseau de radiotéléphonie mobile (10), selon la revendication 6, **caractérisé en ce que** des fréquences sont affectées sous forme de ressources de transmission.

8. Procédé pour l'affectation de ressources de transmission dans un réseau de radiotéléphonie mobile (10), selon l'une quelconque des revendications 6 ou 7, **caractérisé en ce que** des intervalles de temps sont affectés sous forme de ressources de transmission.
